# FASCICULE DE BREVET EUROPEEN

(11) **EP 0 383 093 B1**
(45) Date de publication et mention de la délivrance du brevet: **22.03.1995**
(21) Numéro de dépôt: 90101865.5
(22) Date de dépôt: 31.01.1990
(51) Int. Cl.: C21B 5/00, F23K 3/02, B65G 53/66

(54) **Procédé d'injection pneumatique de quantités dosées de matières pulvérulentes dans une enceinte sous pression variable**
Verfahren zum pneumatischen und dosierten Einblasen feinkörniger Feststoffe in einen unter veränderlichem Druck stehenden Behälter
Method for the pneumatic and dosed injection of pulverised material into a vessel, subjected to a variable pressure

(30) Priorité: 14.02.1989 LU 87453
(43) Date de publication de la demande: 22.08.1990
(73) Titulaire: PAUL WURTH S.A., 1122 Luxembourg (LU)
(72) Inventeur: Schmit, Louis, L-1451 Luxembourg (LU); Kroemmer, Yvon, L-8360 Goetzingen (LU); Ulveling, Léon, L-2319 Howald (LU)
(74) Mandataire: Freylinger, Ernest T.

(56) Documents cités:
- EP-A- 0 235 562
- EP-A- 0 270 013
- US-A- 3 365 242
- US-A- 4 014 577
- PATENT ABSTRACTS OF JAPAN, vol. 7, no. 169 (M-231)[1314], 26 juillet 1983;& JP-A-58 74 426 (KAWASAKI SEITETSU) 04-05-1983
- PATENT ABSTRACTS OF JAPAN, vol. 7, no. 143 (C-172)[1288], 22 juin 1983;& JP-A-58 55 507 (SUMITOMO KINZOKU KOGYO) 01-04-1983
- PATENT ABSTRACTS OF JAPAN, vol. 7, no. 74 (M-203)[1219], 26 mars 1983;& JP-A-58 2527 (HOKUSHIN DENKIN SEISAKUSHO) 08-01-1983

## Description

La présente invention concerne un procédé d'injection par voie pneumatique, de quantités dosées de matières pulvérulentes, par des endroits différents, dans une enceinte se trouvant sous pression variable, selon lequel on forme, dans un dispositif de dosage unique, un mélange pneumatique constitué par les matières pulvérulentes et le gaz de propulsion, on propulse ce mélange à travers une conduite primaire commune dans un distributeur dans lequel le mélange est scindé en courants secondaires qui sont envoyés respectivement à chacun des points d'injection à travers des conduites secondaires.

Quoique n'y étant pas limitée, l'invention sera décrite plus particulièrement en référence à son application préférée, c'est-à-dire l'injection de combustibles solides, notamment du charbon en poudre, dans un four industriel, tel qu'un haut fourneau.

Parmi les procédés et installations connus d'injection de combustibles solides dans un four à cuve, on distingue essentiellement deux types différents. Dans les installations du premier type, le charbon en poudre est dégagé sous pression d'une trémie de distribution dans une série de doseurs dans lesquels on forme le mélange de charbon en poudre et de gaz de propulsion et partir desquels le mélange ainsi formé est véhiculé vers les points d'injection dans le four à cuve. Dans ces installations, on utilise en général un doseur pour chaque porte-vent ou pour chaque couple de porte-vent, de sorte que les quantités injectées à travers les porte-vent peuvent être dosées individuellement. Ces installations ont l'avantage de permettre une grande précision des débits individuels. Par contre, elles présentent l'inconvénient qu'elles nécessitent de nombreuses conduites relativement longues entre la trémie de distribution et le four à cuve. En outre, le dosage peut être rendu difficile par les différents paramètres variables, notamment les fluctuations de pression à l'intérieur du four, ce qui se répercute sur le coût de l'installation, à cause de la nécessité de nombreuses mesures et boucles de régulation.

Dans le deuxième type d'installation, on n'utilise qu'un seul dispositif de dosage au niveau ou en aval de la trémie de distribution. Dans ce doseur, on règle le débit total du charbon en poudre de manière a injecter une quantité prédéterminée de charbon en poudre par unité de temps. Ces installations mettent en oeuvre le procédé décrit dans le préambule, c'est-à-dire que le courant dosé contenant la quantité nécessaire de charbon est divisé dans un distributeur en courants secondaires identiques l'un à l'autre. Ces installations ont l'avantage que le distributeur est disposé à proximité immédiate du four de manière à réduire la longueur des conduites secondaires et, par conséquent, l'encombrement autour du four.

Par contre, ces installations présentent l'inconvénient, qu'il faut maîtriser les paramètres variables, notamment les fluctuations de la pression dans le four, ainsi que l'influence des caractéristiques des différentes conduites afin d'obtenir une répartition uniforme ou déterminée du débit total dosé sur les divers porte-vent, car ces paramètres influencent tous le gradient de pression dans les conduites secondaires et, par conséquent, le débit de la poudre de charbon dans ces conduites. A cet effet on a déjà prévu diverses astuces. On a, par exemple, dejà proposé d'allonger volontairement certaines conduites, ou de les munir d'orifices de passage calibrées afin de compenser les effets des différences des caractéristiques des conduites, qui sont, par exemple, des longueurs différentes, leur section de passage résultant des tolérances de fabrication ou d'usure, l'influence de leur tracé (horizontal, vertical ou oblique). Toutefois, aussi bien ces différences que les mesures nécessaires à la compensation de leurs influences sont très difficiles à saisir et à déterminer. En outre, ces mesures compensatoires ou correctives ne permettent pas l'elimination de l'influence des variations de pression dans le four.

Une autre solution (voir EP-A1-0211295) consiste à prévoir une tuyère ou une section d'étranglement, soit dans les conduites secondaires soit dans le distributeur, où l'on crée une chute de pression nécessaire à une accélération jusqu'à vitesse sonique du courant pneumatique. L'accélération du courant pneumatique jusqu'à une vitesse sonique a l'avantage que les conditions d'écoulement en amont de l'endroit ou se produit la vitesse super critique ne sont plus influencées par les conditions d'écoulement en aval de cet endroit. Ceci présente, bien entendu, le grand avantage que l'on ne doit plus tenir compte des fluctuations de pression et d'autres paramètres variables existant dans les conduites secondaires ou dans l'enceinte dans laquelle les matières pulvérulentes sont injectées. Toutefois, les tuyères nécessaires à l'accélération jusqu'à la vitesse sonique demandent une chute de pression élevée et une section de passage relativement faible, ce qui entraine une pression élevée à l'entrée et une consommation elevée de gaz de propulsion et nécessite un criblage préliminaire de la poudre de charbon pour éliminer les grosses particules et éviter les risques d'obstructions des tuyères.

Du document JP-A-5855507 (base pour le préambule de la revendication 1), on connaît un procédé de régulation pour l'injection pneumatique de charbon pulvérisé dans n tuyères d'un haut fourneau. Ce procédé vise plus précisément une distribution uniforme d'un flux pneumatique de charbon pulvérisé entre ces n tuyères. Le charbon pulvérisé est canalisé sous forme d'un flux pneumatique vers un distributeur, dans lequel il est distribué entre n conduites secondaires (Ai) reliées aux n tuyères du haut fourneau. Les n conduites secondaires (Ai) sont conçues de façon à présenter pour le même débit la même perte de charge. Chacune des conduites secondaires (Ai) est reliée à une source de gaz d'égalisation via une vanne de réglage individuelle (Fi). La vanne de réglage (Fi) de chaque conduite secondaire (Ai) est associée à un circuit de réglage indépendant comprenant un capteur de pression différentielle (Di) mesurant, en amont du point d'injection (Ci) du gaz d'égalisation, la perte de pression entre un point de mesure amont et un point de mesure aval de cette conduite secondaire (Ai). Ces n circuits de réglage sont conçus pour régler individuellement les n débits de gaz d'égalisation de façon à maintenir constantes les n pertes de pression mesurées par les n capteurs de pression différentielle. Il est évident que ce procédé de régulation nécessite des moyens de réglage importants pour sa mise en oeuvre.

Le but de la présente invention est de prévoir un nouveau procédé qui permet une répartition uniforme ou déterminée des matières pulvérulentes dans les conduites secondaires et d'éliminer l'influence des paramètres variables sur cette distribution.

Cet objectif est atteint par un procédé selon la première revendication.

Le procédé propose repose sur la constatation que tous les paramètres variables en aval de la tuyère affectent le débit de la poudre de charbon à travers ces tuyeres car modification de la pression immediatement en aval de la tuyere, c'est-a-dire par variation de la chute de pression ou perte de charge dans cette tuyere. Autrement dit, en prevoyant des moyens pour compenser les effets des parametres variables sur la pression en aval des tuyères, de manière à maintenir celle-ci a une valeur déterminée, le débit à travers ces tuyères, qui est déterminé par leur section de passage, n'est plus affecté par des variations de chute de pression non voulues, car celles-ci restent determinees dans toutes les tuyeres, étant donné que la pression en aval est maintenue à une valeur déterminée et que la pression en amont est déterminée à volonté.

Bien que ces tuyères engendrent une accélération du courant pneumatique, cette accélération reste loin en deçà de la vitesse sonique, de sorte que la pression en amont des tuyères peut être maintenue à un niveau plus faible et que les sections de passage des tuyères peuvent être plus larges que celles utilisées dans les procédés fonctionnant à vitesse sonique.

Selon l'invention, on agit sur la pression par injection d'un gaz d'égalisation à une pression déterminée en aval de chaque tuyère.

Plus précisément, on injecte le gaz d'égalisation à la même pression dans toutes les conduites secondaires.

Pour reduire la consommation en gaz d'égalisation, on peut avantageusement prévoir, dans chacune des conduites secondaires, en aval des tuyères, des tuyeres d'égalisation pour compenser les différences des caractéristiques entre les différentes conduites secondaires.

D'autres particularités et caractéristiques de l'invention ressortiront de la description détaillée de quelques modes d'exécution presentes ci-dessous, a titre d'illustration, en référence aux dessins annexes dans lesquels :

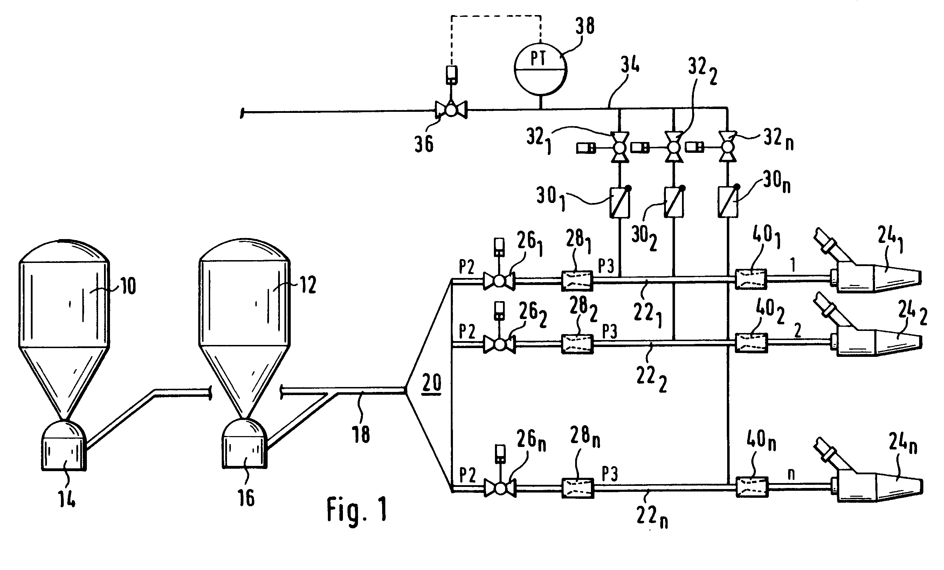

La figure 1 illustre schématiquement un premier mode d'execution du procédé proposé par la présente invention.

La figure 1 représente deux silos 10, 12 dans lesquels est stockée de la poudre de charbon destinée à être envoyée dans un haut fourneau pour l'entretien du processus de combustion. Le débit total de la poudre à injecter dans le four est réglé dans deux doseurs 14, 16 qui sont reliés alternativement par une conduite primaire 18 à un distributeur 20 pouvant être du type decrit dans le document EP-A1-0211295. Dans ce distributeur le courant pneumatique primaire est scinde en courants secondaires qui sont expédiés à travers des conduites secondaires 22₁, 22₂,...22ₙ aux porte- vent 24₁, 24₂,...24ₙ d'un haut fourneau. Chaque conduite 22₁, 22₂,...22ₙ comporte une vanne de fermeture 26₁, 26₂,...26ₙ pour couper au choix l'un ou plusieurs porte-vent 24₁, 24₂,...24ₙ du circuit de distribution.

Le débit dans chaque conduite secondaire 22₁, 22₂,... 22ₙ est déterminé par la section de passage d'une tuyere 28₁, 28₂,... 28ₙ prévue dans chacune des conduites secondaires en aval des vannes 26₁, 26₂,...26ₙ. Cette section de passage est plus importante que celle des tuyères dites à vitesse critique, de sorte que les risques d'obstructions sont quasiment elimines et que le système est opératif avec une pression P 2 beaucoup plus faible en amont des tuyères.

Bien que le débit de la poudre de charbon à travers les tuyeres 28₁, 28₂,... 28ₙ soit déterminé par les sections de passage de celles-ci, ce débit est neanmoins tributaire de la chute de pression à travers ces tuyères, c'est-à-dire du rapport P2/P3. Or, si P2 reste constant, P3 subit l'influence des fluctuations de pression dans le four et dépend des paramètres physiques des conduites secondaires comme explique ci-dessus.

Pour y remedier, l'invention propose de maintenir artificiellement une pression donnée P3 en aval de chacune des tuyeres 28₁, 28₂,...28ₙ. Ceci est réalisé selon le mode de réalisation de la figure 1 en connectant chacune des conduites secondaires 22₁, 22₂,...22ₙ en aval des tuyères 28₁, 28₂,... 28ₙ à travers un clapet anti-retour 30₁, 30₂,... 30ₙ et une vanne de fermeture 32₁, 32₂,... 32ₙ sur une conduite 34 d'un gaz d'égalisation. La pression du gaz dans la conduite est reglée à une valeur PT par une vanne de réglage 36 sous la commande d'un capteur de pression 38 de sorte que la pression P3 en aval de toutes les tuyères est établie et maintenue à la même valeur PT. La valeur de PT peut être déterminée par voie empirique lors de la mise en service d'une installation en mesurant P3 dans chacune des conduites secondaires 22₁, 22₂,... 22ₙ pour différents débits de charbon et en choisissant pour un débit donné un valeur PT qui soit au moins égale à la plus forte des n pressions mesurés dans les n conduites secondaires 22₁, 22₂,... 22ₙ.

Lors de l'operation du systeme, l'influence de parametres ou fluctuations avant tendance a modifier une ou plusieurs pressions P3 en aval des tuyères est automatiquement compensee car une aspiration plus ou moins forte de gaz d'egalisation à la pression PT, ce qui fait que toutes les pressions P3 sont maintenues en permanence à la valeur PT indépendamment des paramètres ou fluctuations en aval.

Il est possible de réduire la consommation de gaz d'égalisation en prévoyant dans chacune des conduites secondaires 22₁, 22₂,...22ₙ des tuyères d'égalisation 40₁, 40₂,... 40ₙ qui sont dimensionnées de manière à compenser les différences entre les caracteristiques des conduites secondaires 22₁, 22₂,... 22ₙ telles que les différences de longueur, de sections, de traces etc..., et qui se répercutent normalement sur la valeur de P3.

## Revendications

1. Procédé d'injection pneumatique de quantités dosées de matières pulvérulentes à n endroits différents (24ᵢ) d'une enceinte sous pression variable, comprenant les étapes suivantes
formation, dans un dispositif de dosage (14, 16), d'un mélange de matières pulvérulentes en suspension dans un gaz de transport,
canalisation du mélange ainsi créé sous forme d'un flux pneumatique unique à travers une conduite de transport (18) vers un distributeur (20),
dans le distributeur (20), division dudit flux pneumatique unique en n flux pneumatiques secondaires,
canalisation de chacun de ces n flux pneumatiques secondaires à travers une conduite secondaire (22ᵢ) vers un desdits endroits d'injections (24ᵢ) de l'enceinte,
connexion de chacune desdites conduites secondaires (22ᵢ) à une source de gaz (36) d'égalisation, définissant ainsi pour chaque conduite secondaire (22ᵢ) un point d'injection de gaz d'égalisation,
**caractérisé**
en ce que dans chaque conduite secondaire (22ᵢ) est créée, entre le distributeur (20) et le point d'injection de gaz d'égalisation de cette conduite secondaire (22ᵢ), une perte de charge locale à l'aide d'une tuyère (28ᵢ), ces pertes de charge locales étant fixées de façon à déterminer, pour une pression identique PT à tous les points d'injection du gaz d'égalisation, le débit voulu de matières pulvérulentes à travers chacune desdites conduites secondaires (22i), et
en ce que la pression de la source de gaz (36) est réglée de façon à imposer à tous les points d'injection de gaz d'égalisation une pression sensiblement égale à ladite pression PT.

2. Procédé d'injection pneumatique selon la revendication 1, caractérisé en ce que en aval desdits points d'injection de gaz d'égalisation on crée, à l'aide de tuyères d'égalisation (40ᵢ), des résistances locales dans lesdites conduites secondaires (22ᵢ), de façon à compenser les différences de longueur, de section, de tracés etc. entre lesdites conduites secondaires (22ᵢ) en aval desdits points d'injection de gaz d'égalisation.

## Claims

1. A method for the pneumatic injection of metered amounts of pulverulent materials at n different points (24ᵢ) of an enclosure under variable pressure, comprising the following stages:
formation in a metering device (14, 16) of a mixture of pulverulent materials in suspension in a transporting gas,
feeding the mixture thus created in the form of a single pneumatic flow through a transport duct (18) to a distributor (20),
division of the said single pneumatic flow into n secondary pneumatic flows in the distributor (20),
feeding each of these n secondary pneumatic flows through a secondary duct (22ᵢ) to one of the said injection points (24ᵢ) of the enclosure,
connection of each of the said secondary ducts (22ᵢ) to a source of compensating gas (36), thus defining a compensating gas injection point for each secondary duct (22ᵢ),
**characterised**
in that a local loss of head is created by means of a nozzle (28ᵢ) in each secondary duct (22ᵢ) between the distributor (20) and the compensating gas injection point of this secondary duct (22ᵢ), these local losses of head being fixed so as to determine, for an identical pressure PT at all the compensating gas injection points, the desired flow rate of the pulverulent materials through each of the said secondary ducts (22ᵢ), and
in that the pressure of the source of gas (36) is adjusted so as to set a pressure at all the compensating gas injection points which is substantially equal to the said pressure PT.

2. A pneumatic injection method according to claim 1, characterised in that local resistances in the said secondary ducts (22ᵢ) are created downstream of the said compensating gas injection points by means of compensating nozzles (40ᵢ), so as to compensate for differences in length, cross-section, layout, etc., between the said secondary ducts (22ᵢ) downstream of the said compensating gas injection points.

## Patentansprüche

1. Verfahren zum pneumatischen und dosierten Einblasen feinkörniger Feststoffe an n verschiedenen Stellen (24ᵢ) eines unter wechselndem Druck stehenden Behälters, das die folgenden Schritte aufweist:
Bildung, in einer Dosiervorrichtung (14, 16), eines Gemisches aus feinkörnigen Feststoffen, die in einem Transportgas in Suspension sind,
Kanalisierung des so erzeugten Gemisches in Form eines einzelnen pneumatischen Flusses durch eine Transportrohrleitung (18) hindurch nach einem Verteiler (20),
in dem Verteiler (20), Aufteilung des einzelnen pneumatischen Flusses in n sekundäre pneumatische Flüsse,
Kanalisierung von jedem dieser n sekundären pneumatischen Flüsse durch eine sekundäre Rohrleitung (22) hindurch nach einer der Einblasstellen (24ᵢ) des Behälters,
Verbindung von jeder der sekundären Rohrleitungen (22ᵢ) mit einer Ausgleichsgasquelle (36), wobei für jede sekundäre Rohrleitung (22ᵢ) ein Ausgleichsgas-Einblaspunkt festgelegt wird,
dadurch gekennzeichnet,
daß in jeder sekundären Rohrleitung (22ᵢ) zwischen dem Verteiler (20) und dem Ausgleichsgas-Einblaspunkt dieser sekundären Rohrleitung (22ᵢ) mit Hilfe einer Düse (28ᵢ) ein örtlicher Druckverlust erzeugt wird, wobei diese örtlichen Druckverluste so festgesetzt werden, daß für den gleichen Druck PT bei allen Einblasstellen des Ausgleichsgases die gewünschte Strömungsrate an feinkörnigen Feststoffen durch jede der sekundären Rohrleitungen (22ᵢ) hindurch festgelegt wird, und
daß der Druck der Gasquelle (36) so eingestellt wird, daß an allen Ausgleichsgas-Einblaspunkten ein Druck vorgegeben wird, der im wesentlichen gleich dem Druck PT ist.

2. Verfahren zum pneumatischen Einblasen, gemäß Anspruch 1, dadurch gekennzeichnet, daß stromabwärts von den Ausgleichsgas-Einblaspunkten mit Hilfe von Ausgleichsdüsen (40ᵢ) örtliche Widerstände in den sekundären Rohrleitungen (22ᵢ) erzeugt werden, so daß die Unterschiede in der Länge, dem Querschnitt, der Leitungsführung, usw. zwischen den sekundären Rohrleitungen (22ᵢ) stromabwärts von den Ausgleichsgas-Einblaspunkten kompensiert werden.
